# EUROPEAN PATENT SPECIFICATION

(11) **EP 1 378 272 B1**
(45) Date of publication and mention of the grant of the patent: **05.04.2006**
(21) Application number: 03015251.6
(22) Date of filing: 04.07.2003
(51) Int. Cl.: A63B 63/00, F16G 11/10

(54) **Retention device for nets and ropes**
Haltevorrichtung für Netze und Seile
Dispositif de rétention de filets et de cordes

(30) Priority: 05.07.2002 ES 200201737
(43) Date of publication of application: 07.01.2004
(73) Proprietor: Equipamientos Y Materiales Deportivos, S.A., 50171-La Puebla De Alfinden, Zaragoza (ES)
(72) Inventor: Marugani Laguna, Pedro Jose, 50005 Zaragoza (ES)
(74) Representative: Isern-Jara, Nuria

(56) References cited:
- DE-C- 10 025 333
- DE-U- 8 907 486
- FR-A- 2 560 774

## Description

### OBJECT OF THE INVENTION

The invention refers to a retention device for nets and ropes in goals or similar types of posts, the nets being of the type used as an element for retention or protection, be it for sports such as football, handball, tennis or in any other similar application.

### BACKGROUND TO THE INVENTION

At the present time the hooks or supports for the fixing of nets and ropes although certainly fulfilling their function, in providing a fixing do not generally meet the necessary conditions of reliability and safety.

The hooks used at the present time usually lack a stop that prevents the exit of the net or rope held by same and, on the other hand, generally have an arrangement in the style of an eyebolt, the curved end of which can be very dangerous in the case of an accidental contact or crashing into it.

For instance, it is known in the art an application no. DE-A-8907486 that describes a device for nets and ropes in goals or similar types of posts. Said device comprises a body including two projections as hooks arranged adjacently in order to fix the net.

### DESCRIPTION OF THE INVENTION

In order to solve the stated problems the retention device for nets and ropes in goals or similar posts, object of the invention, has been thought up and which contributes some constructive peculiarities aimed at providing the retention of the nets or ropes, ensuring the reliability of the hold and noticeably reducing the risk of accident in the situation of a possible impact.

In accordance with the invention, the retention hook is made up of a body that has some means of fixation and an upper groove, in a diagonal direction, for the introduction of the net or rope to be fixed, in such a way that it can enter and continue to be held on the inside of a passageway that goes through the body of the device in a longitudinal manners;

the upper groove has some lateral openings at the ends through which the net or rope to be held passes towards the stated longitudinal passageway; this is arranged in an offset angular direction in regard to the upper groove;

in accordance with the invention, each one of said openings is provided with a tab to hold the net or rope on the inside of the passage, preventing its return to the above mentioned groove and, therefore, the unexpected release by the retention device. ,

The means of fixing of the body is made up by some lateral grooves defined along the opposite laterals of the device body and allowing its assembly on some guide rails located or defined for that purpose on the posts onto which the fixing of the net or rope is required.

Said means of fixing are made up of at least an opening that goes through the body and through its base in order to allow the passage of the corresponding post fixing screw, preventing the turning or movement of the device.

The assembly of the body of the device on a rail by means of the defined grooves on the opposite sides of same prevents, once inserted into said rail, it being undone or removed accidentally.

On the other hand, once the screws have been have been fixed and the net or rope fitted into the fixing position against the device body, said screws cannot be easily manipulated because are covered by it and so are not accessible.

In addition, it has been provisioned that the device body can have a defined base by means of a curved surface in order to make the adaptation easier to the post on which it has to be fitted.

The body has all edges rounded in order to prevent physical injuries if anybody comes into contact with it.

Thus, with the retention device of the invention, the total security in the fixing of nets and ropes is achieved as a result of its diagonal slots preventing the ropes or nets from becoming involuntarily undone, once having been introduced into the stated channel.

Moreover, this retention device has great resistance, little weight and is adaptable to all types of metallic frames that are presently used in the different sports (football, handball, volleyball, tennis etc.) and all types of posts that support the nets.

### DESCRIPTION OF THE DRAWINGS

In order to complement the description that has been made and for the purpose of making the characteristics of the invention easier to understand, attached to this present document is a set of drawings in which, by way of being illustrative but not limiting, the following have been represented:

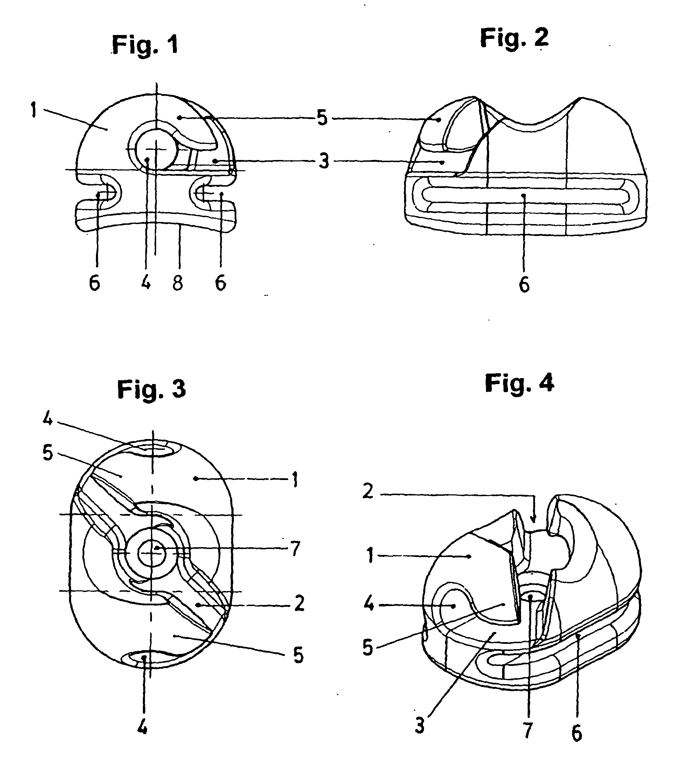

Figures 1, 2 and 3 respectively show a front view, a side view and plan view of an example of the embodiment of the fixing device for ropes and nets for goals and similar types of posts, object of the invention.
Figure 4 shows a perspective view of the fixing device.

### PREFERRED EMBODIMENT OF THE INVENTION

As can be seen in the referred to figures, the fixing device has a body (1) that has an upper slot (2) arranged diagonally, through some openings (3) access is arranged to a passageway (4) that goes longitudinally across the body (1). In turn, each one of the said openings (3) is provided with a tab (5) for the retention of the net or rope to be held on the inside of the passageway (4).

The upper slot (2) of the body (1) allows the assembling of the net or rope into it and its introduction to the inside. Once having been introduced it only remains to turn it so that, through the openings (3) located on each end, the rope or net enters the passageway (4), and it will remain fixed by the tabs (5).

Moreover, the body (1) has lateral grooves (6) located longitudinally on both sides, a hole (7) which crosses perpendicularly through the centre of the base, a base defined with a curved surface (8) and all the edges rounded off to prevent physical injury if contact is made with them.

The side slots (6) allow for the assembly of the body (1) onto some guide profiles fitted to those posts where the fixing has to be made, this body (1) becoming perfectly fixed to same.

Once the body (1) is suitably fixed in position on the post after sliding it by means of the side slots (6) along a guide rail, it is fixed into the required position by means of introducing a special indestructible screw through the hole (7).

Once the body (1) has been fixed to the post by means of the screw placed through the hole (7), the net or rope can be held by placing it into the upper diagonal slot (2) so that once it is in the passageway (4) it is held in place by the tabs (5) of the openings (3).

Once the rope is held in the devices, it is easy to see in the drawings that access to the fixing screw in the hole (7) is made impossible as a consequence of being covered by the net or rope.

Having given sufficient description to the nature of the invention, likewise an example of the preferred embodiment, to whom it may concern, the materials, shape, size and arrangement of the elements described can be modified whenever it does not mean an alteration to the essential characteristics of the invention that are claimed below.

## Claims

1. A retention device for nets and ropes in goals or similar types of posts, being made up of a body (1) that has some means of fixing and an upper slot (2) for the introduction of the rope or net to be held, **characterised in that** said upper slot is arranged diagonally and being connected at both of its ends lateral openings (3) for the passage of the rope or net to be held towards passageway (4) that crosses the body (1) longitudinally; each one of the openings (3) has a tab (5) for the fixing of the net or rope on the inside of the passageway (4).

2. Retention device according to the previous claim **characterised in that** the means of fixing are made up of: some lateral grooves (6) defined on the opposing sides of the body (1) and used to allow its assembly on some guide rails fitted to the corresponding posts, and at least one opening (7) that goes through the body (1) through its base to enable the passing of a fixing screw to the corresponding post.

3. Retention device according to the previous claims **characterised in that** the body (1) has a base that is defined by means of a curved surface (8) to make the fixing of the device to the post easier.

4. Retention device according to the previous claims **characterised in that** the body (1) has all of its edges rounded in order to reduce the risk of physical injury in the event of impact.

## Revendications

1. Crochet de fixation pour filets et cordes utilisés pour les cages de buts ou poteaux similaires, **caractérisé en ce qu'**il se compose d'un corps (1) constitué de points de fixation et d'une rainure supérieure (2) servant à insérer le filet ou la corde à fixer; ladite rainure supérieure présente à chacune de ses extrémités une bouche latérale (3) par laquelle on fait passer la corde ou le filet à fixer dans un passage (4) qui traverse le corps (1) longitudinalement; chacune des bouches (3) étant munies d'un rebord (55) pour la retenue de la corde ou du filet à l'intérieur du passage (4).

2. Crochet, suivant la revendication précédente, **caractérisé en ce que** le passage longitudinal (4) est décalé en angle par rapport à la rainure supérieure (2).

3. Crochet, suivant les revendications précédentes, **caractérisé en ce que** les points de fixation comprennent: des rainures latérales (6) définies sur les côtés opposés du corps (1) et permettant de les monter sur des profils de guidage solidaires des poteaux correspondants; et, au minimum, un orifice (7) qui traverse le corps (1) par la base afin de permettre le passage d'une vis de fixation sur le poteau correspondant.

4. Crochet, suivant les revendications précédentes, **caractérisé en ce que** le corps (1) présente une base définie par une surface courbe (8) qui facilite l'adaptation du crochet au poteau.

5. Crochet, suivant les revendications précédentes, **caractérisé en ce que** le corps (1) présente des bords qui sont tous arrondis afin de réduire le risque de dommages corporels en cas de choc.

## Patentansprüche

1. Haken zur Befestigung von Netzen und Seilen an Tor- oder ähnlichen Pfosten, **dadurch gekennzeichnet, dass** er aus einem Befestigungsmittel und eine obere Nut (2) zur Einführung des zu befestigenden Netzes oder Seiles aufweisenden Körper (1) besteht, wobei diese obere Nut an beiden Enden jeweils eine seitliche Ausnehmung (3) aufweist, durch welche das zu befestigende Seil oder Netz zu einem den Körper (1) in Längsrichtung durchquerenden Durchgangsloch (4) geführt werden kann, und wobei jede dieser Ausnehmungen (3) eine Nase (55) zum Festhalten des Seils oder Netzes im Inneren des Durchgangsloches (4) aufweist.

2. Befestigungshaken nach Anspruch 1, **dadurch gekennzeichnet, dass** das Durchgangsloch (4) bezüglich der oberen Nut (2) winkelverschoben ausgerichtet ist.

3. Befestigungshaken nach den vorangegangenen Ansprüchen, **gekennzeichnet durch** Befestigungsmittel bestehend aus: an einander gegenüberliegenden Seiten des Körpers (1) angeordneten Längsnuten (6) zur Montage desselben auf Führungsprofilen, die mit den entsprechenden Pfosten fest verbundenen sind, und wenigstens einer **durch** die Basis des Körpers (1) durchgehenden Bohrung (7), die den Durchgang einer Befestigungsschraube zur Befestigung auf dem entsprechenden Pfosten ermöglicht.

4. Befestigungshaken nach den vorangegangenen Ansprüchen, **dadurch gekennzeichnet, dass** der Körper (1) eine durch eine gekrümmte Oberfläche (8) definierte Basis aufweist, damit der Haken besser am Pfosten anliegt.

5. Befestigungshaken nach den vorangegangenen Ansprüchen, **dadurch gekennzeichnet, dass** alle Kanten des Körpers (1) abgerundet sind, um die Verletzungsgefahr bei einem Aufprall zu verringern.
